# EUROPÄISCHE PATENTSCHRIFT

(11) **EP 1 192 371 B1**
(45) Veröffentlichungstag und Bekanntmachung des Hinweises auf die Patenterteilung: **04.12.2002**
(21) Anmeldenummer: 00944014.0
(22) Anmeldetag: 07.07.2000
(51) Int. Cl.: F16H 63/30

(54) **STUFENAUTOMATGETRIEBE**
VARIABLE GEAR RATIO TRANSMISSION
TRANSMISSION AUTOMATIQUE A PLUSIEURS RAPPORTS DEMULTIPLIES

(30) Priorität: 13.07.1999 DE 19932614
(43) Veröffentlichungstag der Anmeldung: 03.04.2002
(73) Patentinhaber: ZF FRIEDRICHSHAFEN Aktiengesellschaft, 88038 Friedrichshafen (DE)
(72) Erfinder: BAUKNECHT, Gert, D-88090 Immenstaad (DE); BUCKSCH, Manfred, D-88046 Friedrichshafen (DE)
(86) Internationale Anmeldenummer: EP0006438
(87) Internationale Veröffentlichungsnummer: WO01004518

(56) Entgegenhaltungen:
- EP-A- 0 640 773
- EP-B- 0 434 525
- DE-A- 2 935 916
- DE-A- 4 037 092
- US-A- 5 172 799
- US-A- 5 950 787

## Beschreibung

Die vorliegende Erfindung betrifft ein Stufenautomatgetriebe für Kraftfahrzeuge, mit einer Vielzahl von Kupplungen und Bremsen, die zumindest teilweise als naßlaufende Lamellenkupplungen ausgebildet sind, mit inneren und äußeren Lamellenträgern, die jeweils mit einem Lamellensatz versehen sind, nach dem Oberbegriff des Anspruchs 1.

Stufenautomatgetriebe für Kraftfahrzeuge sind vielfältig bekannt. So beschreibt die EP-B 434 525 ein automatisches Getriebe für Kraftfahrzeuge, welches Planetensätze aufweist, die mittels Kupplungen und Bremsen geschaltet werden und das mit einem mit einer Überbrückungskupplung versehenen hydraulischen Drehmomentwandler verbunden ist. Ferner weist das Automatgetriebe eine Antriebswelle und eine Abtriebswelle auf, mit einem doppelten Planetensatz, mindestens einem Leistungsweg zwischen der Antriebswelle und dem doppelten Planetensatz sowie drei Kupplungen und zwei Bremsen, deren selektives paarweises Eingreifen verschiedene Übersetzungsverhältnisse zwischen der Antriebswelle und der Abtriebswelle bestimmt. Durch diese drei Kupplungen und zwei Bremsen können sechs Vorwärtsgänge und ein Rückwärtsgang erzielt werden.

Bei Kraftfahrzeugen mit automatischen Getrieben treten in bestimmten Situationen, z. B. bei positivem und negativem Lastwechsel, den Komfort beeinträchtigende Schaltrucke auf. Um einen derartigen Schaltruck beim Schaltvorgang des automatischen Getriebes zu verhindern, wurde bereits in der DE-C 29 35 916 vorgeschlagen, daß während des Schaltvorgangs das Drehmoment der Brennkraftmaschine reduziert wird. Neben der Verminderung des Schaltrucks kann durch das während des Schaltablaufs reduzierte Drehmoment der Brennkraftmaschine auch die Schleifzeit der am Schaltvorgang beteiligten Reibungskupplungen des automatischen Getriebes verringert werden, so daß ein geringerer Verschleiß und eine geringere Erwärmung der Reibelemente auftritt. Die Steuerelektronik für die Brennkraftmaschine ist dabei mit einer Erkennungschaltung ausgestattet, die während eines Schaltvorgangs aus der Getriebesteuerung in Schaltsignal erhält. In einem Speicher der Steuereinrichtung für die Brennkraftmaschine sind Kennfelder abgelegt, nach denen der Zündwinkel und/oder die Einspritzimpulsbreite last- und drehzahlabhängig gesteuert werden. Problematisch ist dabei die exakte Ermittlung des Zeitpunkts der Reduzierung des Drehmoments.

Die DE-A 40 37 092 beschreibt ein Verfahren zur Steuerung des Drehmoments mittels einer Brennkraftmaschine, die mit einem automatischen Getriebe verbunden ist, das von der Brennkraftmaschine angetrieben wird, wobei letzterer eine Steuerelektronik zugeordnet ist, die aufgrund von Drehzahl-, Last- und ggf. Temperatursignalen den Zündwinkel der Zündanlage und/oder die Einspritzimpulsbreite der Kraftstoffeinspritzanlage steuert. Eine dem automatischen Getriebe zugeordnete Getriebeelektronik steuert ihrerseits aufgrund von Drehzahl- und Lastanforderungssignalen die Schaltvorgänge des automatischen Getriebes.

Eine weitere Möglichkeit zur Verbesserung des Schaltkomforts besteht darin, der Motorelektronik sogenannten Komfortfilter als Lastwechel- und Ruckdämpfer zuzuordnen, wobei die Zeiten der Komfortfilter zwischen Fahrerwunsch und innermotorischer Umsetzung ausschließlich durch die Elektronik der Brennkraftmaschine vorgegeben sind.

Ein weiteres Problem bei modernen Stufenautomatgetrieben besteht darin, daß es große Probleme bereitet, mit einer Kupplung einerseits sehr hohe statische Momente zu halten und andererseits mit derselben Kupplung Schaltvorgänge mit geringer Last oder gar Ausrollschaltungen ohne Last zu beherrschen. Bei der Auslegung der Kupplung müssen hierbei Kompromisse eingegangen werden, die den Schaltkomfort beeinträchtigen.

Aufgabe der vorliegenden Erfindung ist es, ein Stufenautomatgetriebe für Kraftfahrzeuge derart auszugestalten, daß diese Schaltkomforteinbussen nicht auftreten.

Ausgehend von einem Stufenautomatgetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, daß den Kolben der Kupplung eine Stauscheibe für das Hydrauliköl derart zugeordnet ist, daß ein zusätzlicher Druckraum gebildet ist, welcher derart ausgestaltet ist, daß der Gesamthub des Kolbens nicht behindert wird.

Die Stauscheibe kann dabei innerhalb oder außerhalb der Kupplung angeordnet sein; sofern durch die beiden durch die Stauscheibe voneinander getrennten Druckräume nicht die erforderliche Differenzfläche erzielt wird, ist vorteilhafterweise jeder Druckraum mit einer Fluidleitung versehen, so daß die beiden Druckräume mit unterschiedlichen Drücken beaufschlagt werden können.

Durch die erfindungsgemäße Ausgstaltung wird also der Vorteil erzielt, daß durch Schaffung einer Differenzfläche an der gleichen Kupplung die für das hohe statische Haitemoment der Kupplung benötigte große Kolbenfläche reduziert wird, so daß die Schaltvorgänge in Abhängigkeit der Differenzfläche verringert werden können; dies bedeutet eine optimale Anpassung der Kupplung an hohe Halte- und niedrige Schaltmomente, ohne daß Mehraufwand durch eine zusätzliche Kupplung entsteht. Eine einfache Ansteuerung der hierbei gebildeten Differenzfläche erfolgt durch das elektronische Steuergerät für das Getriebe.

Im folgenden wird die Erfindung anhand der Zeichnung näher erläutert, in der zwei vorteilhafte Ausführungsbeispiel dargestellt sind.
Es zeigen:
- Fig. 1: einen Teilschnitt durch ein Stufenautomatgetriebe mit einer innerhalb der Kupplung angeordneten Stauscheibe und
- Fig. 2: einen Teilschnitt durch ein Stufenautomatgetriebe mit einer außerhalb der Kupplung angeordneten Stauscheibe.

Da Stufenautomatgetriebe dem Fachmann geläufig sind, sind in den beigefügten Figuren, in denen gleiche Teile mit gleichen Bezugszeichen versehen sind, nur die für das Verständnis der Erfindung notwendigen Bauteile mit Bezugszeichen versehen.

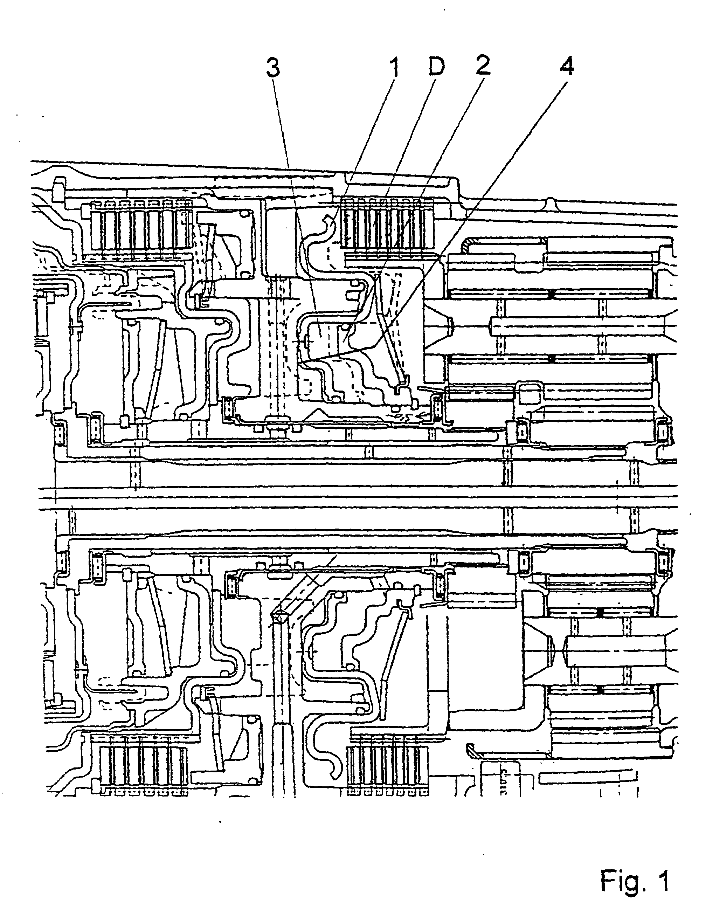

Bei dem in Fig. 1 dargestellten Teilschnitt ist mit 1 der hydraulische Kolben für die Betätigung einer mit D bezeichneten naßlaufenden Lamellenkupplung eines Stufenautomatgetriebes bezeichnet, dem eine Stauscheibe 2 derart vorgeschaltet ist, daß in der Kupplung D ein zusätzlicher Druckraum 3 gebildet ist, welcher derart ausgestaltet ist, daß der Gesamthub des Kolbens 1 nicht behindert wird. Bei Schaltvorgängen mit geringem Momentenbedarf, d. h. bei Schaltungen mit geringer Last oder bei Ausrollschaltungen ohne Last, wird sowohl der verbleibende Kolbenraum 4 als auch der durch die Stauscheibe 2 abgetrennte Druckraum 3 mit gleichem Fluiddruck versorgt.

Durch die entgegengesetzte Abstützung der Druckkräfte wird nun nur noch die Differenz der beiden Druckflächen wirksam, so daß die Schaltkräfte den zu schaltenden niedrigen Moment angepaßt sind.

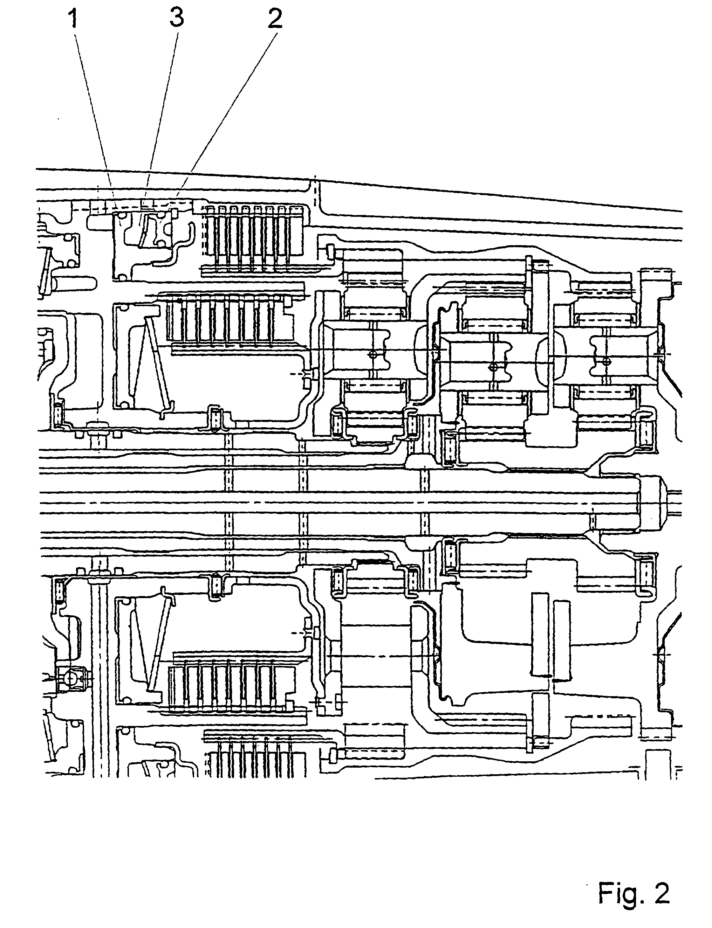

Bei dem in Fig. 1 dargestellten Ausführungsbeispiel ist die Stauscheibe 2 innerhalb der Kupplung D angeordnet; bei dem in Fig. 2 dargestellten Ausführungsbeispiel ist die Stauscheibe 2 außerhalb der Kupplung angeordnet, wobei auch hier der zusätzliche gebildete Druckraum im Kolben 1 mit 3 bezeichnet ist.

Sofern es aus konstruktiven Gründen nicht möglich ist, die benötigte Differenzfläche zu erreichen, so daß bei entgegengesetzter Abstützung der Druckkräfte keine Differenz der beiden Druckflächen wirksam ist, können auch die beiden Druckräume mit unterschiedlichen Drücken beaufschlagt werden, um die Schaltvorgänge feinfühlig durch geringe Schaltkräfte zu machen; zu diesem Zweck sind dann die beiden Druckräume 3, 4 jeweils mit einer eigenen Fluidleitung zu versehen und getrennt anzusteuern.

### Bezugszeichen

- 1: Kolben
- 2: Stauscheibe
- 3: Druckraum
- 4: Druckraum

- D: Kupplung

## Patentansprüche

1. Stufenautomatgetriebe für Kraftfahrzeuge, mit einer Anzahl von Kupplungen und Bremsen, die zumindest teilweise als naßlaufende Lamellenkupplungen ausgebildet sind, mit inneren und äußeren Lamellenträgern, die jeweils mit einem Lamellensatz versehen sind, wobei der Lamellensatz eines inneren Lamellenträgers zusammen mit einem zugeordneten Lamellensatz des äußeren Lamellenträgers eine Kupplung bildet und wobei jeder Kupplung ein hydraulischer Kolben (1) zum Einrücken bzw. Ausrücken der Kupplung zugeordnet ist, **dadurch gekennzeichnet, daß** dem Kolben (1) der Kupplung eine Stauscheibe (2) für das Hydraulikfluid derart zugeordnet ist, daß ein zusätzlicher mit Schaltdruck beaufschlagbarer Druckraum (3) gebildet ist, der derart ausgestaltet ist, daß der Gesamthub des Kolbens (1) nicht behindert wird.

2. Stufenautomatgetriebe nach Anspruch 1, **dadurch gekennzeichnet, daß** die Stauscheibe (2) innerhalb der Kupplung angeordnet ist.

3. Stufenautomatgetriebe nach Anspruch 1, **dadurch gekennzeichnet, daß** die Stauscheibe (2) außerhalb der Kupplung angeordnet ist.

4. Stufenautomatgetriebe nach einem der Ansprüche 1 bis 3, **dadurch gekennzeichnet, daß** die beiden durch die Stauscheibe (2) voneinander getrennten Druckräume (3, 4) mit je einer Fluidleitung versehen sind, um die Druckräume mit unterschiedlichen Drücken zu beaufschlagen.

## Claims

1. Variable gear ratio transmission for motor vehicles, comprising a number of clutches and brakes which are at least partially configured as wet multi-plate clutches, with inner and outer plate supports, each of which is provided with a plate set, whereby the plate set of an inner plate support and an assigned plate set of the outer disk support form a clutch and whereby a hydraulic piston (1) is assigned to each clutch for engaging and disengaging the clutch, **characterized in that** a baffle plate (2) for the hydraulic fluid is assigned to the piston (1) of the clutch, which results in the formation of an additional pressure chamber (3) which can be pressurized by the shifting pressure and which is configured so as not to impede the total lift of the piston (1).

2. Variable gear ratio transmission according to claim 1, **characterized in that** the baffle plate (2) is arranged inside the clutch.

3. Variable gear ratio transmission according to claim 1, **characterized in that** the baffle plate (2) is arranged outside the clutch.

4. Variable gear ratio transmission according to one of the claims 1 to 3, **characterized in that** the two pressure chambers (3, 4) separated by the baffle plate (2) each have a fluid line in order to pressurize the pressure chambers with different pressures.

## Revendications

1. Transmission automatique à étages de rapports pour véhicules automobiles, comprenant un certain nombre d'embrayages et de freins qui sont constitués, au moins en partie, par des embrayages à disques travaillant dans un liquide et comprenant eux-mêmes des supports de disques intérieurs et extérieurs qui sont pourvus chacun d'un jeu de disques, le jeu de disques d'un support de disques intérieur formant un embrayage avec un jeu de disques d'un support de disques extérieur et un piston hydraulique (1) étant affecté à chaque embrayage pour embrayer ou débrayer l'embrayage, **caractérisée en ce qu'**un réducteur de pression (2) pour le fluide hydraulique est associé au piston (1) de l'embrayage de telle sorte qu'il se forme un compartiment de pression additionnel (3) qui peut être chargé par une pression de changement de rapport et qui est configuré de telle manière que la course totale du piston (1) ne soit pas gênée.

2. Transmission automatique à étages de rapports selon la revendication 1, **caractérisée en ce que** le réducteur de pression (2) est disposé à l'intérieur de l'embrayage.

3. Transmission automatique à étages de rapports selon la revendication 1, **caractérisée en ce que** le réducteur de pression (2) est disposé à l'extérieur de l'embrayage.

4. Transmission automatique à étages de rapports selon l'une des revendications 1 à 3, **caractérisée en ce que** les deux compartiments de pression (3, 4), séparés par le réducteur de pression (2), sont pourvus chacun d'une conduite de fluide pour charger les compartiments de pression avec des pressions différentes.
